# EUROPÄISCHE PATENTSCHRIFT

(11) **EP 2 534 416 B1**
(45) Veröffentlichungstag und Bekanntmachung des Hinweises auf die Patenterteilung: **02.09.2020**
(21) Anmeldenummer: 11736031.3
(22) Anmeldetag: 11.07.2011
(51) Int. Cl.: F21V 19/00, F21V 29/00, F21Y 115/10

(54) **BEFESTIGUNGSELEMENT, LEUCHTMODUL UND LEUCHTVORRICHTUNG**
FASTENING ELEMENT, LUMINOUS MODULE AND LUMINOUS APPARATUS
ÉLÉMENT DE FIXATION, MODULE D'ÉCLAIRAGE ET DISPOSITIF D'ÉCLAIRAGE

(30) Priorität: 14.07.2010 DE 102010031312
(43) Veröffentlichungstag der Anmeldung: 19.12.2012
(73) Patentinhaber: OSRAM GmbH, 80807 München (DE)
(72) Erfinder: BREIDENASSEL, Nicole, 93077 Bad Abbach (DE); FROST, Tobias, 93133 Burglengenfeld (DE); HOETZL, Guenter, 93049 Regensburg (DE); PREUSCHL, Thomas, 93161 Sinzing (DE); SACHSENWEGER, Peter, 93197 Zeitlarn (DE)
(86) Internationale Anmeldenummer: PCT/EP2011/061729
(87) Internationale Veröffentlichungsnummer: WO 2012/007413

(56) Entgegenhaltungen:
- WO-A1-2007/128070
- WO-A1-2010/044011
- DE-A1-102006 048 230
- DE-A1-102007 038 787
- DE-U1-202007 016 530

## Beschreibung

Die Erfindung betrifft ein Befestigungselement zum Befestigen eines Lichtquellensubstrats, insbesondere eines Leuchtmoduls, an einer Auflage. Die Erfindung betrifft ferner ein Leuchtmodul mit einem solchen Befestigungselement. Die Erfindung betrifft auch eine Leuchtvorrichtung mit einem an einer Auflage befestigten Lichtquellensubstrat oder Leuchtmodul.

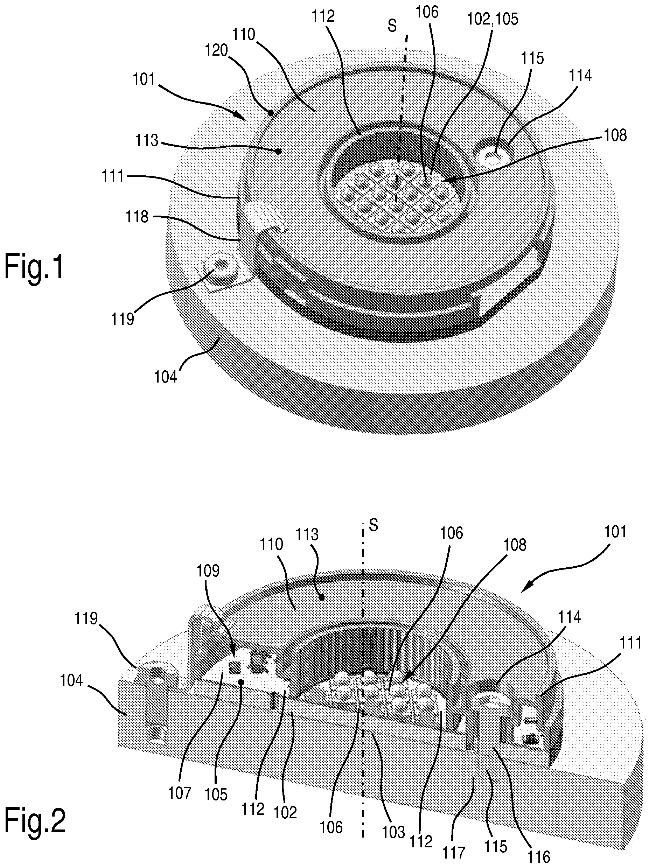

In **Fig.1** und **Fig.2** wird ein Leuchtmodul gezeigt, welches ein Lichtquellensubstrat in Form einer im Wesentlichen kreisscheibenförmigen Leiterplatte 102 aufweist. Die Leiterplatte 102 ist mit ihrer Rückseite 103 auf einem als Auflage dienenden Kühlkörper 104 aufgesetzt und ist an ihrer Vorderseite 105 mit mehreren Lichtquellen in Form von Leuchtdioden 106 und mehreren elektronischen Bauteilen 107 bestückt. Das Leuchtmodul 101 und der Kühlkörper 104 können zusammen eine Leuchtvorrichtung 101, 104 bilden oder Teil davon sein.

Der Kühlkörper 104 weist eine im Wesentlichen zylinderförmige Grundform auf. Die Leuchtdioden 106 sind in einem zentralen Bereich 108 der Leiterplatte 102 kompakt angeordnet, und die elektronischen Bauteile 107 befinden sich in einem kreisringförmigen Umgebungsbereich 109, welcher den zentralen Bereich 108 konzentrisch umgibt.

Der Umgebungsbereich 109 der Leiterplatte 102 ist von einer unterseitig offenen Ringabdeckung 110 abgedeckt bzw. überwölbt. Die Ringabdeckung 110 weist eine Außenwand 111 mit einer im Wesentlichen hohlzylindrischen Form und eine dazu konzentrische Innenwand 112 mit einer im Wesentlichen hohlzylindrischen Form mit geringerem Durchmesser auf. Die Außenwand 111 und die Innenwand 112 sind durch eine kreisringförmige, horizontal ebene Abdeckplatte 113 oder Decke miteinander verbunden. Die Ringabdeckung 110 weist in anderen Worten eine Querschnittsform auf, die im Wesentlichen einem umgekehrten "U" entspricht. Die Ringabdeckung 110 sitzt auf der Leiterplatte 102 auf, und zwar außenseitig bündig mit der Leiterplatte 102. Die Innenwand 112 umgibt die Leuchtdioden 106 und ist an ihrer den Leuchtdioden 106 zugewandten Seite als ein spiegelnder oder diffuser Reflektor ausgebildet, um einen Lichtkanal für die Leuchtdioden 106 zu bilden.

Die Ringabdeckung 110 weist eine Schraubenhalterung 114 zur aufsitzenden Aufnahme einer Schraube 115 auf, wobei die Schraube 115 durch eine Durchführungsöffnung 116 in der Leiterplatte 102 in ein Schraubloch 117 in dem Kühlkörper 104 führt und dort verschraubt ist. Durch ein Anziehen der Schraube 115 wird die Ringabdeckung 110 an den Kühlkörper 104 herangezogen und presst dadurch die Leiterplatte 102 zu ihrer Fixierung zwischen die Ringabdeckung 110 und den Kühlkörper 104 ein.

An einer bezüglich einer Symmetrieachse S gegenüberliegenden Seite der Ringabdeckung 110 wird diese mittels eines elastischen gebogenen Blechstreifens 118 aus Metall an dem Kühlkörper gehalten. Der Blechstreifen 118 ist mittels einer Schraube 119 an dem Kühlkörper 104 befestigt und mit seinem anderen Endbereich an der Abdeckplatte 113 der Ringabdeckung 110 aufliegend. Der Blechstreifen 118 steht dabei unter einer Spannung, so dass er die Ringabdeckung unter allen thermischen Belastungszuständen auf die Leiterplatte 102 drückt, um Fehlanpassungen aufgrund von Herstellungstoleranzen, Verlustwärme und Alterungsprozessen usw. zu unterdrücken.

Dabei ragt die Außenwand 111 nach vorne über die Abdeckplatte 113 hinaus, und zwar über den gesamten Umfang. Dadurch weist die Ringabdeckung 110 auch in einem Bereich, in dem sie von dem Blechstreifen 118 überwölbt wird, einen nach oben gerichteten Vorsprung 120 auf (welcher durch den über die Abdeckplatte 113 nach vorne überstehenden Bereich der Außenwand 111 gebildet wird). So kann ein Abrutschen des Blechstreifens 118 von der Ringabdeckung 110 oder umgekehrt verhindert werden.

Die Ringabdeckung kann anstelle der Verwendung des Blechstreifens 118 alternativ auch mittels zwei oder mehr Schraubenhalterungen 114 und darin aufgenommenen Schrauben 115 befestigt werden.

DE 10 2007 038 787 A1 offenbart ein Leuchtmodul für eine Halbleiterlichtquellen-Leuchte, mit einem Kühlkörper, mit einem auf dem Kühlkörper angeordneten, eine Halbleiterlichtquelle tragenden Trägerteil und mit einer auf dem Trägerteil angeordneten Vorsatzoptik für die Halbleiterlichtquelle, wobei an der Vorsatzoptik Resthaken bzw. Gegenrastabschnitte und am Trägerteil oder am Kühlkörper Gegenrastabschnitte bzw. Rasthaken derart vorgesehen sind, dass in der Endmontageposition die Rasthaken in die Gegenrastabschnitte eingreifen.

WO 2007/128070 A1 offenbart eine Befestigungsanordnung mit einer Befestigungsvorrichtung zum Befestigen eines Bauteils an einem Träger. Die Befestigungsvorrichtung umfasst einen Montageabschnitt, der in einer festen Position relativ zu dem Träger befestigt werden kann und mindestens zwei elastische Befestigungsfinger, die sich vom Montageabschnitt erstrecken. Die mindestens zwei Befestigungsfinger stoßen an mindestens zwei voneinander beabstandeten Stellen an das Bauteil an und greifen in dieses ein. Jeder Finger übt eine Klemmkraft aus, wodurch das Bauteil in einer festen Position auf dem Träger festgeklemmt wird. In einer beispielhaften Anwendung wird die Befestigungsvorrichtung verwendet, um ein Bauteil innerhalb einer Leuchte festzuklemmen.

WO 2010/044011 A1 offenbart ein System zum lösbaren Verbinden eines ersten Elements mit einem zweiten Element. Das erste Element umfasst einen Abschnitt, der von einem Abschnitt des zweiten Elements umgeben ist. Die Abschnitte haben Oberflächen aus wärmeleitenden Materialien, um Wärme zwischen den beiden Elementen zu übertragen. Der Wärmeausdehnungskoeffizient des Materials des umgebenden Abschnitts des ersten Elements ist größer als der Wärmeausdehnungskoeffizient des Materials des umgebenden Abschnitts des zweiten Elements. Insbesondere kann ein solches System zum lösbaren Verbinden einer LED-Lampe mit einer Fassung für die LED-Lampe verwendet werden.

DE 10 2006 048 230 A1 offenbart ein Leuchtdiodensystem mit mindestens einem Leuchtdiodenbauelement, bei dem ein Leuchtdiodenchip in einem Leuchtdiodengehäuse auf einer Wärmesenke angeordnet ist, die an der Rückseite des Leuchtdiodengehäuses thermisch abschließbar ist. Es ist eine Trägerplatte mit einer Vorderseite und einer Rückseite und einem Loch zur Aufnahme des Leuchtdiodenbauelements vorgesehen. Das Leuchtdiodenbauelement ragt von der Rückseite der Trägerplatte her in das Loch. An der Rückseite der Trägerplatte ist eine elektrisch isolierende thermische Anschlussschicht aufgebracht, die mit der Wärmesenke thermisch leitend verbunden ist. Weiterhin ist ein Verfahren zum Herstellen eines Leuchtdiodensystems angegeben.

DE 20 2007 016 530 U1 offenbart eine elektrische Leuchte für erhöhte Schutzart wie z.B. Schutz gegen Feuchtigkeit, Staub und dgl., bestehend aus einem Grundkörper, an dem mehrere Einzel-LED-Leuchtmittel, vorzugsweise Leistungs-Leuchtdioden angebracht sind, wobei jedes LED-Leuchtmittel mit einer Einzelabdeckung, bestehend aus einer transparenten, teiltranspa-renten, oder transluzenten leicht lösbar befestigten, ein-oder mehrteiligen Dichthaube abgedichtet ist, die auf dem Grundkörper befestigt ist.

Es ist die **Aufgabe** der vorliegenden Erfindung, eine besonders einfach montierbare und thermisch effektive Anbindung mindestens eines Leuchtmoduls, insbesondere LED-Moduls, an eine zugehörige Auflage zu ermöglichen.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch ein Befestigungselement zum, insbesondere werkzeuglosen, Befestigen eines Lichtquellensubstrats an einer Auflage (insbesondere eines Leuchtmoduls), wobei das Befestigungselement dazu eingerichtet oder ausgestaltet ist, (zumindest teilweise) auf dem Lichtquellensubstrat aufzusitzen, und das Befestigungselement mindestens ein Befestigungsmittel zum Befestigen des Befestigungselements an einer Auflage des Lichtquellensubstrats aufweist (das Lichtquellensubstrat liegt direkt oder indirekt auf der Auflage). In anderen Worten kann das Befestigungselement mindestens ein Stützelement zum Aufsitzen auf einer mit zumindest einer Halbleiterlichtquelle bestückten Seite des Lichtquellensubstrats aufweisen. Das mindestens eine Stützelement kann dazu mindestens eine Kontaktfläche zum (direkten oder indirekten) Kontaktieren der bestückten Seite des Lichtquellensubstrats aufweisen.

Das Befestigungselement drückt somit das Lichtquellensubstrat auf die Auflage und ermöglicht z.B. auch einen thermisch effizienten Kontakt zwischen dem Lichtquellensubstrat und der Auflage. Durch das Befestigungselement kann auf dedizierte oder separate Befestigungsmittel wie Schrauben usw. verzichtet werden, was Stückkosten verringert und eine Montage vereinfacht. Insbesondere kann auf den Einsatz von kleinen Schrauben (M3 bis M4) verzichtet werden, was eine einfache Handhabung (da nun kein Schraubendreher (manuell, Druckluft-, oder Elektroschrauber) mehr benötigt wird) ermöglicht. Vielmehr wird eine Montage eventuell werkzeuglos per Hand oder mit einfachen Andrückwerkzeugen ermöglicht.

Das Befestigungselement ist als eine Abdeckung zum zumindest teilweisen Abdecken eines Lichtquellensubstrats ausgestaltet. Dadurch können Teile eingespart werden und eine besonders einfache Montage bewirkt werden. Ein solches Befestigungselement bzw. Abdeckung kann die mindestens eine Lichtquelle und/oder mindestens ein elektronisches Bauteil überdecken. Das abdeckende Befestigungselement kann das Lichtquellensubstrat teilweise (z.B. in Form einer Ringabdeckung) oder vollflächig überdecken oder überwölben.

Das Befestigungselement weist ferner mindestens einen verschwenkbaren Hebel mit einem außenliegenden äußeren Arm auf, wobei der äußere Arm seitlich ausfahrbar oder abspreizbar ist. So kann das Befestigungselement die Auflage mit dem mindestens einen äußeren Arm kontaktieren und daran festpressen oder festdrücken, und zwar durch eine gezielte Einstellung einer Schwenklage des Hebels.

Das Lichtquellensubstrat kann insbesondere ein Substrat sein, welches mit mindestens einer Lichtquelle bestückt ist. Zusätzlich kann das Lichtquellensubstrat mit mindestens einem elektronischen Bauteil bestückt sein. Das Lichtquellensubstrat kann beispielsweise eine Leiterplatte oder ein sog. (z.B. keramisches) Submount sein. Die Leiterplatte ist vorzugsweise eine Metallkernleiterplatte (MCPCB), um eine gute Wärmespreizung der Abwärme von den Lichtquellen zu erreichen. Alternativ kann das Leiterplattensubstrat z.B. aber auch FR4 usw. als Basismaterial aufweisen. Das Leiterplattensubstrat kann z.B. auch ein Hybrid sein, z.B. mit FR4 mit einem eingepressten Metallkern, z.B. einem Kupferkern oder einem versenkten (eingebetteten) Kupferkern.

Das Lichtquellensubstrat kann insbesondere einseitig bestückt sein. Das Lichtquellensubstrat kann einlagig oder mehrlagig ausgeführt sein. Das Lichtquellensubstrat kann starr oder flexibel (Flexplatte oder Flexplatine o.ä.) sein.

Das Lichtquellensubstrat kann ferner einen oder mehrere Bereiche aufweisen, die von einer Bauteilbestückung und einer Leiterbahnführung freigespart sind und in denen das Befestigungselement kontaktieren und die Anpresskraft einleiten kann. Die Freisparung hält bevorzugt vorgegebene Luft- und Kriechstrecken in Abhängigkeit von einer Betriebsspannung ein. Vorzugsweise ist bei Metallkernplatinen dort das Dielektrikum freigespart, so dass das Befestigungselement direkt auf die Metallbasis gedrückt werden kann, was unter anderem einen weiteren thermischen Übergang eröffnet und eine Anpressung verbessert. Durch die Freisparung des Dielektrikums kann ferner eine Beschädigung des Dielektrikums vermieden werden. Auch mögen Kriecheffekte (Spannungsrelaxation) des Dielektrikums vermieden werden.

Die Freisparungen zur Kontaktierung des Befestigungselements sind vorzugsweise nahe an den zu entwärmenden Bauteilen (Lichtquellen, elektronischen Bauteilen usw.) angeordnet, um dort eine gute Anpressung an die Auflage, insbesondere Kühlkörper, zu erreichen. Insbesondere bei steifen Lichtquellensubstraten können die Freisparungen auch an einem äußeren Rand angeordnet sein.

Bevorzugterweise umfasst die mindestens eine Lichtquelle mindestens eine Leuchtdiode oder eine andere Halbleiterlichtquelle. Bei Vorliegen mehrerer Leuchtdioden können diese in der gleichen Farbe oder in verschiedenen Farben leuchten. Eine Farbe kann monochrom (z.B. rot, grün, blau usw.) oder multichrom (beispielsweise weiß, z.B. kaltweiß, warmweiß oder mintweiß, aber auch nicht-weiß, z.B. mit einer leuchtstoffkonvertierten Farbmischung) sein. Auch kann das von der mindestens einen Leuchtdiode abgestrahlte Licht ein infrarotes Licht (IR-LED) oder ein ultraviolettes Licht (UV-LED) sein. Mehrere Leuchtdioden können ein Mischlicht erzeugen; z.B. ein weißes Mischlicht. Die mindestens eine Leuchtdiode kann mindestens einen wellenlängenumwandelnden Leuchtstoff enthalten (Konversions-LED). Die mindestens eine Leuchtdiode kann in Form mindestens einer einzeln gehäusten Leuchtdiode oder in Form mindestens eines LED-Chips vorliegen. Mehrere LED-Chips können auf einem gemeinsamen Substrat ("Submount") montiert sein. Die mindestens eine Leuchtdiode kann mit mindestens einer eigenen und/oder gemeinsamen Optik zur Strahlführung ausgerüstet sein, z.B. mindestens einer Fresnel-Linse, Kollimator, und so weiter. Anstelle oder zusätzlich zu anorganischen Leuchtdioden, z.B. auf Basis von InGaN oder AlInGaP, sind allgemein auch organische LEDs (OLEDs, z.B. Polymer-OLEDs) einsetzbar. Alternativ kann die mindestens eine Lichtquelle z.B. außer einer LED auch mindestens einen Diodenlaser oder noch eine andere Halbleiterlichtquelle aufweisen. Jedoch ist die Art der Lichtquellen nicht auf Halbleiterlichtquellen beschränkt.

Die Auflage kann insbesondere ein Kühlkörper (Wärmekonvektionselement, Wärmespreizungselement usw.) sein. Der Kühlkörper kann ein dedizierter Kühlkörper sein oder z.B. ein anderer Teil einer Lampe oder ein Teil einer Leuchte sein.

Das mindestens eine Befestigungselement kann im einfachsten Fall mindestens eine elastisch dehnbare Klammer sein.

Das Befestigungselement kann bei Montage durch eine Spannung insbesondere eine Kraft senkrecht zu dem Lichtquellensubstrat erzeugen. Dabei ist das Befestigungselement vorzugsweise elastisch gedehnt, insbesondere dauerhaft elastisch gedehnt. Diese elastische Dehnung wird ganz oder teilweise zur Erzeugung der Andrückkraft genutzt. Die Verwendung eines so gespannten bzw. elastisch gedehnten Befestigungselements kann insbesondere Geometrietoleranzen ausgleichen und/oder bei Wärmeausdehnungen (speziell mehreren Temperaturzyklen) einen Verlust der Anpresskraft verringern oder sogar verhindern.

Das Befestigungselement besteht vorzugsweise aus metallischen Werkstoffen wie Stahl, im speziellen Federstahl, Kupfer und/oder Messing. Die Materialstärke (Wandstärke) kann je nach Dimension und Ausgestaltung des Befestigungselements und der aufzubringenden Anpresskraft oder Andrückkraft insbesondere zwischen ca. 0,2 mm und 2 mm betragen. Insbesondere bei einer hinreichenden Temperatur- und/oder Kriechbeständigkeit können auch Kunststoffmaterialien verwendet werden, was insbesondere für eine Einhaltung vorgegebener Luft- und Kriechstrecken innerhalb limitierter Geometrieabmaße vorteilhaft sein kann. Auch kann das Befestigungselement aus einem Metall bestehen, welches zumindest bereichsweise mit einem Kunststoff umspritzt oder einer Gummierung ummantelt ist.

Es ist eine Ausgestaltung, dass eine Schwenklage des mindestens einen Hebels mittels mindestens eines zugehörigen Einstellelements, insbesondere Schraube, einstellbar ist. Dadurch lässt sich eine Schwenklage des Hebels besonders einfach und genau einstellen.

Es ist ferner eine Ausgestaltung, dass das Befestigungselement mindestens zwei verschwenkbare Hebel in einer (insbesondere dreh- oder spiegel-)symmetrischen Anordnung aufweist. Dadurch kann eine Position des Befestigungselements und eines zugehörigen Leuchtmoduls lateral variabel eingestellt werden, z.B. durch unterschiedliches Verschwenken oder Ausfahren der Hebel. Dies ist insbesondere vorteilhaft, falls drei oder vier Hebel vorgesehen sind. Auch ergibt sich so eine besonders sichere Befestigung.

Der Hebel ist ferner vorzugsweise elastisch ausgebildet, um ein geringfügiges Lösen oder Zurückdrehen der Schraube kompensieren zu können.

Es ist eine für eine kompakte Bauform vorteilhafte Ausgestaltung, dass an dem Befestigungselement mindestens ein optisches Element befestigt ist. Zudem kann so eine relative Positionierung des optischen Elements an dem Befestigungselement und damit an der mindestens einen Lichtquelle mit einer besonders geringen Toleranz erreicht werden.

Es ist eine zur besonders einfachen Befestigung des Leuchtmoduls vorteilhafte Ausgestaltung, dass das Befestigungselement fest mit dem Lichtquellensubstrat verbunden ist. Dadurch brauchen das Substrat und das Befestigungselement nicht gesondert positioniert werden, sondern das Leuchtmodul kann als Ganzes in einem Ablauf positioniert und befestigt werden.

Die Aufgabe wird auch gelöst durch ein Leuchtmodul, aufweisend mindestens ein Lichtquellensubstrat mit einer an einer Vorderseite des Lichtquellensubstrats angeordneten Lichtquelle, wobei das Lichtquellensubstrat mit einem Befestigungselement wie oben beschrieben ausgestattet ist, wobei das Befestigungselement auf der Vorderseite des Lichtquellensubstrats aufsitzt. In der Leiterplatte brauchen keine Schraubenlöcher mehr vorgesehen zu werden, was eine Flächennutzung verbessert.

Die Aufgabe wird auch gelöst durch eine Leuchtvorrichtung, aufweisend ein Leuchtmodul, insbesondere wie oben beschrieben, wobei das Lichtquellensubstrat mit seiner Rückseite auch der Auflage aufliegt, insbesondere flächig, und das Befestigungselement sowohl auf der Vorderseite des Lichtquellensubstrats aufsitzt als auch an der Auflage befestigt ist.

Auch in der Auflage brauchen keine Schraubenlöcher mehr vorgesehen zu werden. Bei gegossenen Kühlkörpern ergibt sich dadurch ein einfacheres Werkzeug und weniger Verschleiß. Bei Strangpresskühlkörpern ist kein Bohren, Gewindeschneiden und Entgraten mehr notwendig.

Das Befestigungselement drückt somit insbesondere das Lichtquellensubstrat auf die Auflage und sorgt so für einen besonders sicheren Sitz. Das Befestigungselement kann dazu insbesondere unter einer dauernden Spannung stehen, so dass die Andrückwirkung ebenfalls dauernd gegeben ist. Dazu kann das Befestigungselement in einem Kraftpfad zwischen dem Kontaktbereich an dem Lichtquellensubstrat und dem Befestigungsbereich an der Auflage zumindest bereichsweise elastisch dehnbar sein.

Die Leuchtvorrichtung kann beispielsweise eine Lampe oder eine Leuchte sein.

Es ist eine Ausgestaltung mit einem Befestigungselement, welches mindestens einen verschwenkbaren Hebel mit einem außenliegenden äußeren Arm aufweist, wobei der äußere Arm seitlich ausfahrbar ist, dass die Auflage eine Aussparung aufweist, in welche zumindest das Lichtquellensubstrat eingesetzt ist, wobei der mindestens eine äußere Arm so weit ausgefahren ist, dass er die Auflage, insbesondere eine Seitenwand der Aussparung, pressend kontaktiert.

Es ist eine Weiterbildung, dass die Aussparung mindestens einen Hinterschnitt aufweist, in welchen mindestens ein äußerer Arm eingreift. Dadurch kann sicher verhindert werden, dass sich das Leuchtmodul von der Auflage löst. Zudem kann so ein höherer, insbesondere genau dosierter, Anpressdruck des Lichtquellensubstrats auf die Auflage eingestellt werden.

Allgemein kann es zur Verbesserung eines thermischen Übergangs zwischen dem Lichtquellensubstrat und der Auflage vorteilhaft sein, dass dazwischen mindestens eine Lage aus einem gut wärmeleitenden Material, insbesondere thermischen Schnittstellenmaterial, wie einer Wärmeleitpaste, -kleber, - folie usw., eingefügt ist.

In den folgenden Figuren wird die Erfindung anhand von Ausführungsbeispielen schematisch genauer beschrieben. Dabei können zur Übersichtlichkeit gleiche oder gleichwirkende Elemente mit gleichen Bezugszeichen versehen sein.
- Fig.3: zeigt als Schnittdarstellung in Seitenansicht ein LED-Modul gemäß einer ersten, nicht erfindungsgemäßen Ausführungsform, welches an einem Kühlkörper befestigt ist;
- Fig.4: zeigt als Schnittdarstellung in Seitenansicht ein Befestigungselement des LED-Moduls gemäß der ersten Ausführungsform;
- Fig.5: zeigt als Schnittdarstellung in Seitenansicht einen Ausschnitt eines Befestigungselements gemäß noch einer nicht erfindungsgemäßen Ausführungsform;
- Fig.6: zeigt als Schnittdarstellung in Seitenansicht ein LED-Modul gemäß noch einer weiteren nicht erfindungsgemäßen Ausführungsform;
- Fig.7a: zeigt im Profil ein Befestigungselement gemäß einer erfindungsgemäßen Ausführungsform in einem ersten, entspannten Zustand;
- Fig.7b: zeigt das Befestigungselement aus Fig.7a in einem zweiten, seitlich vorgespannten Zustand;
- Fig.7c: zeigt das Befestigungselement aus Fig.7a und Fig.7b in einem Kühlkörper eingesetzt in einem dritten, teilgespannten Zustand;
- Fig.8a: zeigt als Schnittdarstellung in Seitenansicht ein LED-Modul gemäß noch einer weiteren erfindungsgemäßen Ausführungsform, welches in einen Kühlkörper eingesetzt, aber noch nicht daran befestigt ist;
- Fig.8b: zeigt als Schnittdarstellung in Seitenansicht das LED-Modul aus Fig.8a wie es nun an dem Kühlkörper befestigt ist;
- Fig.9a: zeigt als Schnittdarstellung in Seitenansicht das LED-Modul aus Fig.8b, welches in einen anderen Kühlkörper eingesetzt, aber noch nicht daran befestigt ist;
- Fig.9b: zeigt als Schnittdarstellung in Seitenansicht das LED-Modul aus Fig.9a wie es nun an dem anderen Kühlkörper befestigt ist;
- Fig.10a: zeigt als Schnittdarstellung in Seitenansicht ein LED-Modul gemäß noch einer weiteren nicht erfindungsgemäßen Ausführungsform;
- Fig.10b: zeigt ausschnittsweise das LED-Modul aus Fig.10a in Draufsicht;
- Fig.11a: zeigt als Schnittdarstellung in Seitenansicht ein LED-Modul gemäß noch einer weiteren nicht erfindungsgemäßen Ausführungsform;
- Fig.11b: zeigt ausschnittsweise das LED-Modul aus Fig.11a in Draufsicht; und
- Fig.12: zeigt als Schnittdarstellung in Seitenansicht einen Ausschnitt aus dem LED-Modul aus Fig.11a und Fig.11b.

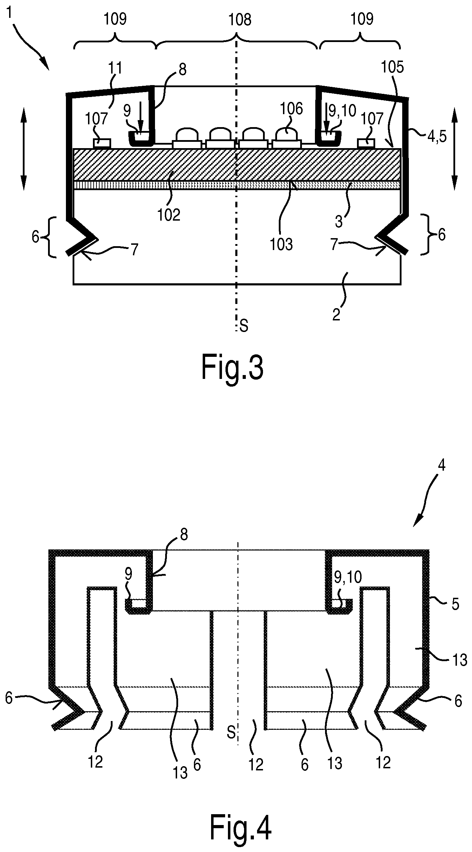

**Fig.3** zeigt als Schnittdarstellung in Seitenansicht ein zu dem LED-Modul 101 ähnliches Leuchtmodul in Form eines LED-Moduls 1, das auf einem als eine Auflage dienenden Kühlkörper 2 befestigt ist. Das LED-Modul 1 und der Kühlkörper 2 bilden zumindest einen Teil einer Leuchtvorrichtung 1, 2, z.B. einer Lampe oder einer Leuchte.

Der Kühlkörper 2 weist ebenfalls eine im Wesentlichen zylinderförmige Grundform aufweist, entspricht in seinem Durchmesser jedoch nun zumindest in etwa dem Durchmesser der Leiterplatte 102. Die Leiterplatte 102 (allg.: das Lichtquellensubstrat) ist mit ihrer Rückseite 103 über ein Wärmeschnittstellenmaterial (TIM; "Thermal Interface Material) 3, wie einer Wärmeleitpaste, einer Wärmeleitfolie oder einem Wärmeleitkleber, an dem Kühlkörper 2 angebracht.

Die Außenwand 5 der Ringabdeckung 4 ist nun an der Leiterplatte 102 vorbei bis zu dem Kühlkörper 2 heruntergezogen und greift seitlich in diesen ein. Ein den Kühlkörper 2 kontaktierenden Kontaktabschnitt 6 der Ringabdeckung 4 ist dazu als ein im Profil in Richtung des Kühlkörpers 2 (nach innen) gerichteter, V-förmiger Rastvorsprung ausgebildet, welcher in einen passenden Rücksprung 7 des Kühlkörpers 2 einrasten kann. Der Kontaktabschnitt 6 dient also als ein Rastelement, welches in ein Rastgegenelement des Kühlkörpers 2, den Rücksprung 7, einrasten kann.

Die Innenwand 8 der Ringabdeckung 4 ist an ihrem auf die Leiterplatte 102 aufsetzenden Rand 9 im Profil U-förmig umgebogen. Die Innenwand 8 dient dabei als ein Abstützelement oder Abstützabschnitt für die Ringabdeckung 4. Durch die U-Form, insbesondere mit einem langen Quer- oder Verbindungsschenkel 10, lässt sich eine breite Kontaktfläche erreichen, was einen Anpressdruckdruck verringert und Beschädigungen der Leiterplatte 102 vermeidet. Auch kann so eine breite Wärmeübergangsfläche erreicht werden.

Wenn die Ringabdeckung 4 an dem Kühlkörper 2 eingerastet ist, ist sie leicht elastisch gedehnt und steht so unter einer Zugspannung (wie durch die Doppelpfeile angedeutet) zwischen dem Kontaktabschnitt 6 und dem Rand 9. Die Ringabdeckung drückt dadurch die Leiterplatte 102 dauerhaft auf den Kühlkörper 2 und ermöglicht einen sicheren Sitz der Leiterplatte 102 auf dem Kühlkörper 2. Die Ringabdeckung 4 ist somit auch als ein Befestigungselement für die Leiterplatte 102 ausgebildet.

Auch wird eine feste Verbindung erreicht, welche ein Wackeln der Ringabdeckung 4 vermeidet. Durch den Druck an den entsprechenden Kontaktbereichen (zwischen dem Kontaktabschnitt 6 und dem Kühlkörper 2 sowie dem Rand 9 und dem Substrat 2, wie durch die einfachen Pfeile angedeutet) wird eine gute Dichtigkeit, insbesondere Lichtdichtigkeit, Staubdichtigkeit, und/oder Feuchte- oder Wasserdichtigkeit des durch die Abdeckung, hier z.B. Ringabdeckung 4, überwölbten Zwischenraums 11 ermöglicht. Dazu kann zwischen der Abdeckung und der Leiterplatte und/oder der Auflage mindestens ein Dichtelement vorgesehen sein, z.B. ein Dichtring.

Anstelle durch Schraubverbindungen ist die Ringabdeckung 4 also als ein selbsthaltendes Befestigungselement ausgestaltet. Ein selbsthaltenden Element zeichnet sich dadurch aus, dass es ohne weitere Befestigungsmittel (z.B. ohne Schrauben 115, 119) an dem Kühlkörper 2 (oder einem anderen geeigneten Objekt) befestigbar ist. Das selbsthaltende Element kann vielmehr selbst mit mindestens einem Befestigungsmittel zur Befestigung an dem Kühlkörper (insbesondere integral) ausgerüstet sein bzw. ein solches aufweisen oder sein. Mittels der Ringabdeckung 4 kann folglich auf zusätzliche (externe) Befestigungselemente verzichtet werden und eine Montage vereinfacht werden, z.B. durch ein einfaches Aufstecken der Ringabdeckung 4 bis zum Einrasten in dem Kühlkörper 2.

Die Innenwand 8 ist hier senkrecht stehend ausgestaltet, kann aber z.B. auch schräg liegen.

Die Ringabdeckung 4 besteht vorzugsweise aus einem sich während der Montage nur elastisch verformenden Material, z.B. aus einem metallischen Blech oder Kunststoff. Dabei wird ein metallisches Material bevorzugt, so dass an der Kontaktfläche zwischen dem Querschenkel 10 des Rands 9 und dem Substrat 2 auch ein thermischer Übergang stattfindet und die Ringabdeckung auch als ein Kühlkörper oder Wärmespreizelement dienen kann.

In einer alternativen Ausgestaltung kann die Ringabdeckung 4 vor einer Montage des LED-Moduls 1 bereits an dem Substrat 2 fest angebracht, z.B. vormontiert, sein, beispielsweise durch eine feste Verbindung zwischen dem Rand 9 und der Leiterplatte 102. Dies ermöglicht eine noch einfachere Montage des LED-Moduls 1 an dem Kühlkörper 2

**Fig.4** zeigt die selbsthaltende Ringabdeckung 4 als Schnittdarstellung in Seitenansicht. Um eine seitliche Bewegung der Außenwand 5 zumindest im Bereich des Kontaktabschnitts 6 zu ermöglichen, sind in der Außenwand 5 symmetrisch um die Längsachse oder Symmetrieachse S verteilte Entlastungsschlitze 12, z.B. acht Entlastungsschlitze 12, eingebracht. Dadurch werden in der Außenwand 5 im Bereich der Entlastungsschlitze 12 elastisch federnde Laschen 13 gebildet, welche die Kontaktabschnitte 6 aufweisen.

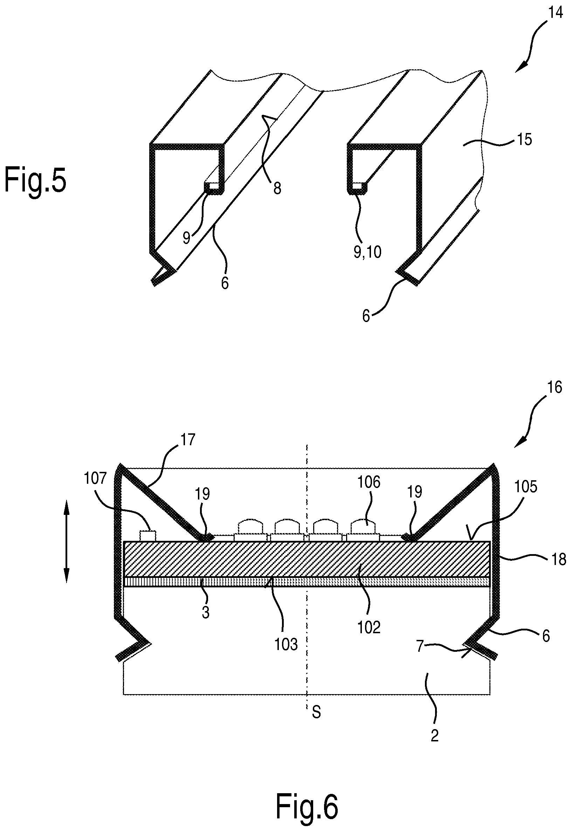

**Fig.5** zeigt im Ausschnitt ein weiteres Befestigungselement in Form einer selbsthaltende Abdeckung (oder Gehäuse) 14 als Schnittdarstellung in Seitenansicht. Die selbsthaltende Abdeckung 14 weist ein Profil gleich oder ähnlich zu dem Profil der selbsthaltenden Ringabdeckung 4 auf, ist jedoch nun nicht rotationssymmetrisch, sondern sich längserstreckend ausgestaltet. Dadurch kann die Abdeckung 14 insbesondere eine sich längserstreckende Leiterplatte abdecken. Die auch als eine Lasche dienende Außenwand 15 kann ebenfalls Entlastungsschlitze aufweisen oder darauf verzichten.

**Fig.6** zeigt ein LED-Modul 16 mit einem ähnlichen Aufbau wie das LED-Modul 1, außer dass nun die Innenwand 17 der Ringabdeckung 18 im Profil schräg verläuft und so einen sich ausgehend von den LEDs 106 öffnenden Reflektor bilden kann. Alternativ kann die Innenwand 17 im Profil auch gekrümmt ausgestaltet sein, z.B. parabelförmig.

Ferner ist der Rand 19 der Innenwand 17, welcher auf der Leiterplatte 102 aufsetzt, im Profil gebogen "V"-förmig ausgestaltet.

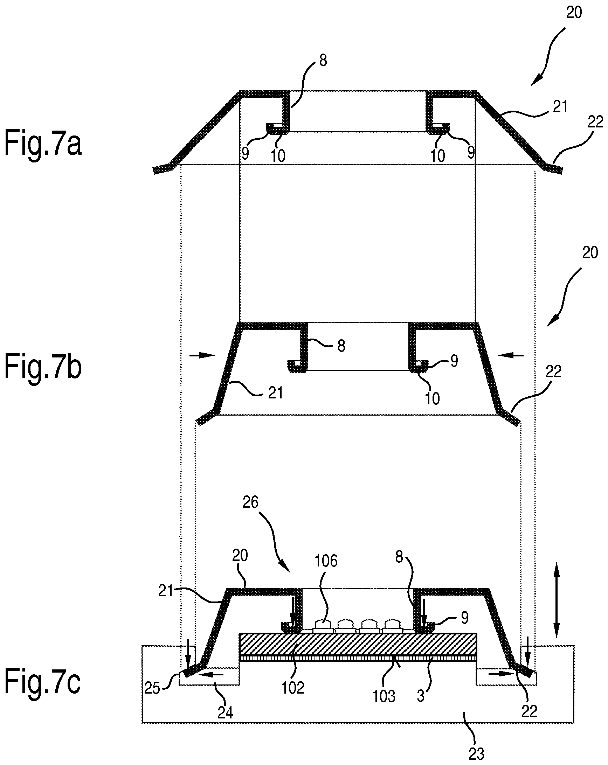

**Fig.7a** zeigt ein Profil eines Befestigungselements in Form einer selbsthaltenden Ringabdeckung 20 gemäß noch einer weiteren Ausgestaltung. Deren Außenwand 21 ist nun nicht wie bei den Ringabdeckungen 4 oder 14 im Wesentlichen senkrecht ausgestaltet, sondern schräg und weitet sich nach unten (in Richtung seiner Rückseite bzw. seines Kontaktabschnitts 22) nach außen auf. Der Kontaktabschnitt 22, welcher mit dem unteren freien Rand abschließt, ist gegenüber der restlichen Außenwand 21 noch stärker nach außen abgeschrägt, insbesondere abgeknickt oder abgekantet.

**Fig.7b** zeigt die Ringabdeckung 20, wie sie zur Montage durch eine zumindest zweiseitige Kraftaufbringung, wie durch die Pfeile angedeutet, auf die Außenwand 21 in lateraler Richtung zusammengedrückt wird.

**Fig.7c** zeigt die Ringabdeckung 20, wie sie in einen Kühlkörper 23 eingesetzt ist und dazu seitlich entlastet worden ist. Durch die seitliche Entlastung ist die elastisch verformbar ausgestaltete Ringabdeckung 20 seitlich zurückgefedert und hat sich teilweise entspannt. Der Kühlkörper 23 weist dazu einen (z.B. umlaufenden) oder mehrere in seine das LED-Modul 20 tragende Seite eingebrachte Montageaussparungen 24 auf. Die Montageaussparungen 24 weisen jeweils einen an einer Außenseite ansetzenden Hinterschnitt 25 auf.

Zum Befestigen der Ringabdeckung 20 an dem Kühlkörper 23 wird die wie in Fig.7b gezeigt seitlich eingedrückte Ringabdeckung 20 mit seinem Kontaktabschnitt 22 in die Montageaussparung(en) 24 eingesetzt. Mit der seitlichen Entlastung wird der Kontaktabschnitt 22 in den zugehörigen Hinterschnitt 25 gedrückt. Die Unterbringung des Kontaktabschnitts 22 in dem Hinterschnitt 25 bewirkt, dass sich die Ringabdeckung 20 nicht aus der Montageaussparung 24 löst. Zudem wird die durch die Doppelpfeile angedeutete permanente Dehnung der Ringabdeckung 20 in senkrechter Richtung ermöglicht, was ein Wackeln in Richtung der Symmetrieachse S verhindert. Ein seitliches Verrutschen wird dadurch verhindert, dass die Ringabdeckung 20 weiterhin teilweise lateral unter Spannung steht.

Insgesamt ist auch die Ringabdeckung 20 selbsthaltend und benötigt zu ihrer Befestigung und zur Befestigung des zugehörigen LED-Moduls 26 an dem Kühlkörper 23 keine weiteren Verbindungselemente. Das LED-Modul 26 und der Kühlkörper 23 bilden können einen Teil einer Leuchtvorrichtung bilden.

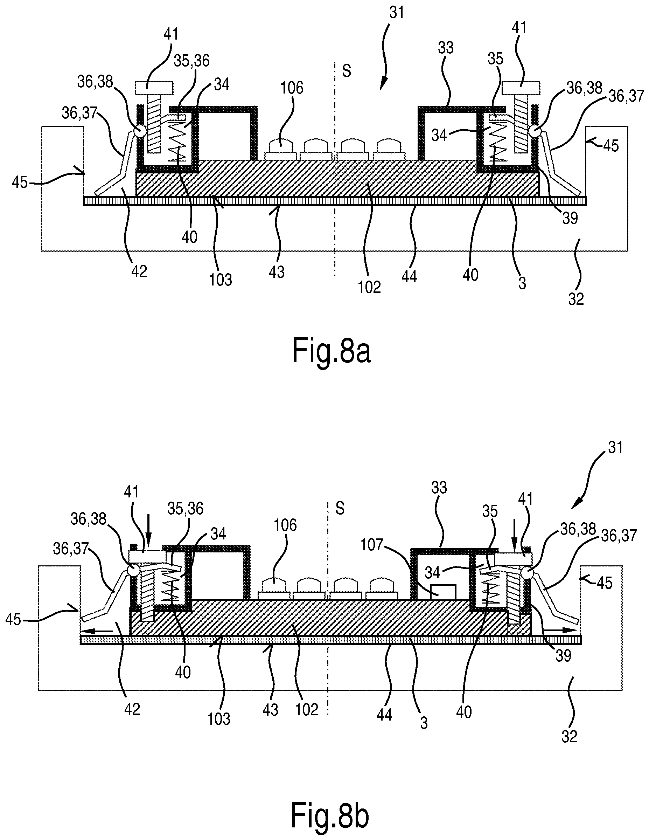

**Fig.8a** zeigt als Schnittdarstellung in Seitenansicht ein LED-Modul 31 gemäß noch einer weiteren Ausgestaltung, das in einen Kühlkörper 32 eingesetzt, aber noch nicht daran befestigt ist.

Das LED-Modul 31 weist eine nun starre Ringabdeckung 33 auf, welche an zumindest zwei Stellen einen Aufnahmeraum 34 aufweist. In dem Aufnahmeraum 34 ist ein innerer Arm 35 eines Hebels 36 untergebracht, während ein äußerer Arm 37 des Hebels 36 seitlich außerhalb des Aufnahmeraums 34 angeordnet ist. Ein Drehpunkt 38 des Hebels 36 befindet sich in oder an einer Außenwand 39 des Aufnahmeraums 34. Wenn der innere Arm 35 in dem Aufnahmeraum 34 heruntergedrückt wird, verschwenkt der äußere Arm 37 nach oben und nach außen. Der Hebel 36 ist zumindest geringfügig elastisch biegsam oder federnd ausgebildet.

In dem jeweiligen Aufnahmeraum 34 befindet sich ferner ein Federelement 40, z.B. eine Spiralfeder, welche den inneren Arm 35 so nach oben drängt, dass der äußere Arm 37 stärker an dem LED-Modul 31 anliegt. In dem jeweiligen Aufnahmeraum 34 befindet sich außerdem zumindest teilweise eine von außen (oben) zugängliche Schraube 41.

Das LED-Modul 31 ist in eine Aussparung 42 des Kühlkörpers 32 eingesetzt und kann insbesondere rückwärtig einen Boden 43 der Aussparung 42 über eine Lage 44 aus einem Wärmeschnittstellenmaterial kontaktieren. Die Seitenwand 45 der Aussparung 42 ist hier senkrecht ohne einen Hinterschnitt ausgeführt.

**Fig.8b** zeigt als Schnittdarstellung in Seitenansicht das LED-Modul 31, wie es in dem Kühlkörper 32 befestigt ist. In diesem Zustand ist die Schraube 41 in den Aufnahmeraum 34 hineingeschraubt (wie durch die senkrechten Pfeile angedeutet) und drückt dadurch den inneren Arm 35 nach unten, z.B. indem sie den inneren Arm 35 mit ihrem Schraubkopf mitnimmt. Dadurch fährt der äußere Arm 37 seitlich nach außen aus (wie durch die horizontalen Pfeile angedeutet) und kontaktiert die Seitenwand 45 der Aussparung 42. So kann das LED-Modul 31 in der Aussparung 42 festgeklemmt werden. Dadurch, dass der Hebel 36 elastisch verformbar ist, ist die Klemmbefestigung vergleichsweise tolerant gegenüber einem geringfügigen Zurückdrehen der Schraube 41. Durch die gleichzeitige Bewegung des äußeren Arms 37 nach oben kann die Ringabdeckung 33 und damit das gesamte LED-Modul 31 auch gegen den Boden 43 der Aussparung 42 gedrückt werden.

Bei dem LED-Modul 31 umfasst das Befestigungselement somit zumindest den Hebel 36 und die Schraube 41. Das LED-Modul 31 und der Kühlkörper 32 bilden hier einen Teil einer Leuchtvorrichtung.

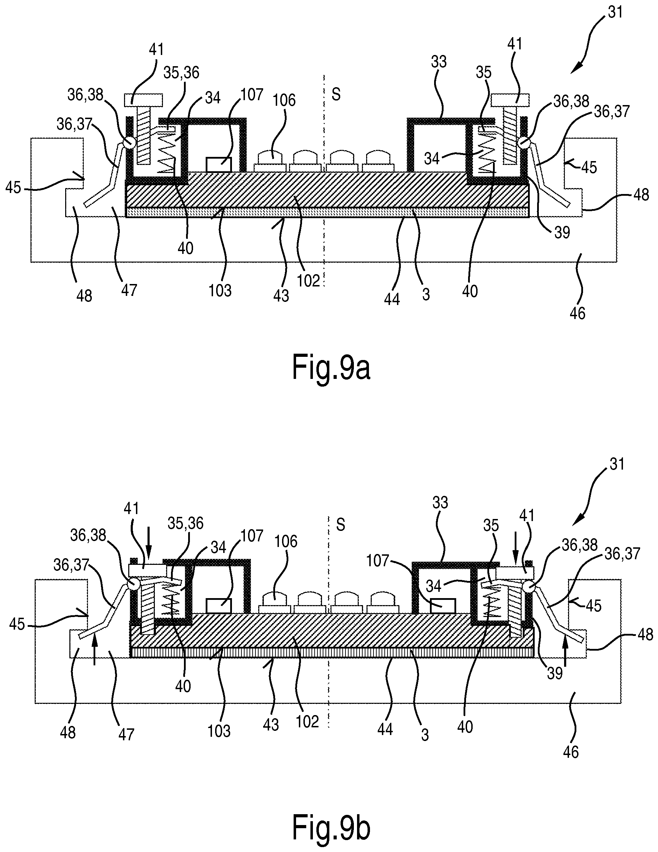

**Fig.9a** zeigt als Schnittdarstellung in Seitenansicht das LED-Modul 31, welches nun in einen Kühlkörper 46 eingesetzt, aber nicht darin befestigt ist. Die Aussparung 47 weist einen seitlich außen angeordneten Hinterschnitt 48 auf. **Fig.9b** zeigt als Schnittdarstellung in Seitenansicht das LED-Modul 31, wie es in dem Kühlkörper 46 befestigt ist, und damit zumindest einen Teil einer Leuchtvorrichtung 31, 46.

Das LED-Modul 31 ist nun nicht oder nicht ausschließlich kraftschlüssig an dem Kühlkörper 46 befestigt, sondern auch formschlüssig durch den Eingriff des äußeren Arms 37 in den zugehörigen Hinterschnitt 48. So kann eine noch sicherere Befestigung erreicht werden. Zudem kann ein Anpressdruck des LED-Moduls 31 auf den Kühlkörper 46 durch eine Einstellung eines Einschraubwegs der Schraube 41 variiert werden, da mit einer stärkeren Verschwenkung des Hebels 36 der äußere Arm 37 auch stärker gegen eine Oberseite des Hinterschnitts 48 drückt. Die Andrückkraft ist nicht durch eine Reibungskraft des äußeren Arms 37 an der Aussparung 47 begrenzt. Der Hebel 36 ist vorzugsweise ohne einen Hinterschnitt 48 steifer oder weniger biegsam ausgeprägt als bei einem Vorhandensein des Hinterschnitts 48.

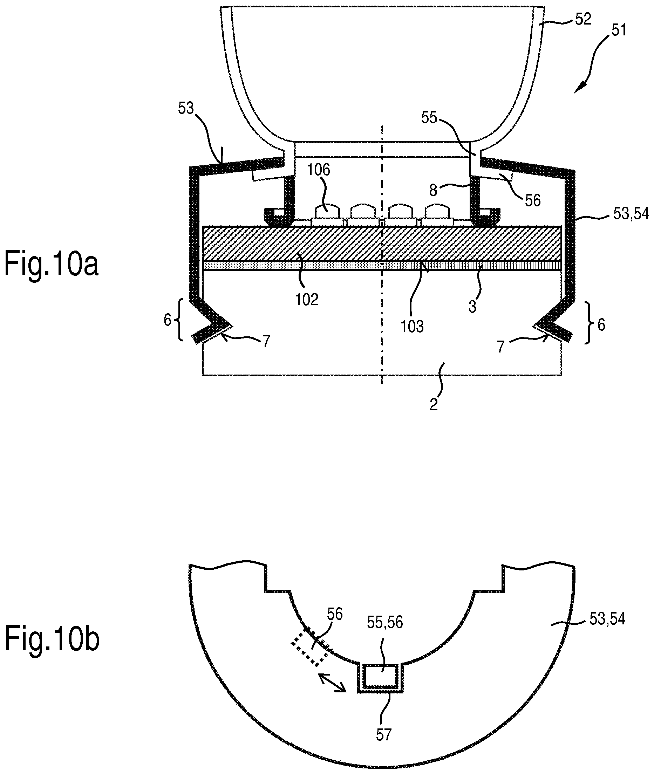

**Fig.10a** zeigt als Schnittdarstellung in Seitenansicht ein LED-Modul 51 gemäß noch einer weiteren Ausführungsform. Das LED-Modul 51 ist ähnlich zu dem LED-Modul 1 aufgebaut und an einem Kühlkörper 2 befestigbar, weist jedoch nun die Möglichkeit auf, ein optisches Element, hier: einen Reflektor 52, an einer Oberseite 53 des Befestigungselements (d.h. hier: der Ringabdeckung 54) oberhalb der LEDs 106 zu befestigen. **Fig.10b** zeigt einen Ausschnitt aus der Ringabdeckung 54 in Draufsicht auf deren Oberseite 53. Der Reflektor 52 ist dazu mit einem an der Ringabdeckung 54 zu befestigenden rückwärtigen Kragen 55 ausgestattet, welcher an vier Stellen nach außen umgebördelte oder umgebogene Laschen 56 aufweist. Die Zahl der Laschen 56 kann allgemein mindestens zwei, bevorzugt mindestens drei, umfassen. Der Reflektor 52 wird mit seinem Kragen 55 an der Innenwand 8 der Ringabdeckung 54 eingesetzt. Die Laschen 56 können dazu zunächst in passende Aussparungen 57 in der Oberseite 53 eingesteckt werden, und dann kann der Reflektor 52 verdreht werden, z.B. ähnlich zu oder gleich einem Schlüsselloch- oder einem Bajonettverschluss, wie durch den Doppelpfeil in Fig.10b angedeutet.

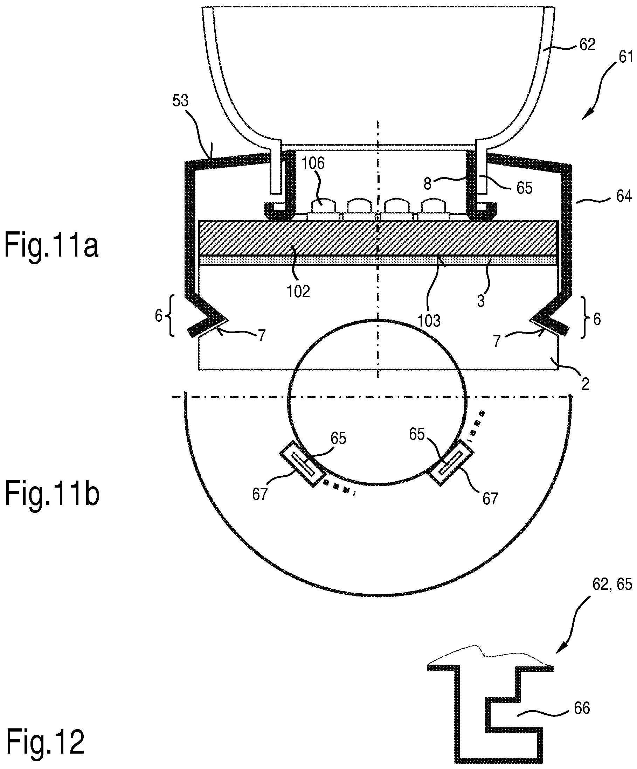

**Fig.11a** zeigt als Schnittdarstellung in Seitenansicht ein LED-Modul 61 gemäß noch einer weiteren Ausführungsform. **Fig.11b** zeigt einen Ausschnitt aus dem LED-Modul 61 in Draufsicht. Das LED-Modul 61 ist ähnlich zu dem LED-Modul 51 aufgebaut und an einem Kühlkörper 2 befestigbar, jedoch ist nun der rückwärtige Kragen 65 des Reflektors 62 nicht umgebördelt oder umgebogen ausgestattet. Vielmehr weist der Kragen 65 an seiner Außenseite einen Rücksprung 66 auf, wie in **Fig.12** gezeigt, welcher in die Ringabdeckung 64 eingreift, wenn der Kragen 65 zuvor in eine entsprechende Aussparung 67 der Ringabdeckung 64 eingesteckt, und der Reflektor 62 dann ähnlich zu Fig. 10b verdreht worden ist. Der Kragen 65 mag insbesondere nicht umlaufend ausgestaltet sein, sondern mehrere entsprechend ausgeformte Laschen oder Vorsprünge aufweisen.

Selbstverständlich ist die vorliegende Erfindung nicht auf die gezeigten Ausführungsbeispiele beschränkt.

So können Merkmale unterschiedlicher Ausführungsformen auch gemischt oder ausgetauscht werden. Beispielsweise kann die Innenwand 8 der Ringabdeckung 4 auch schräg liegen, wie in Fig.6 gezeigt.

Allgemein kann der Kühlkörper ein dedizierter Kühlkörper sein, welcher wiederum an ein weiteres Objekt, wie eine Leuchte, anbringbar ist. Alternativ ist der Kühlkörper z.B. ein Teil einer Leuchte (das LED-Modul wird dann also direkt an eine Leucht montiert, welche insbesondere als ein Wärmespreizungselement / Kühlkörper dienen kann.

Allgemein kann anstelle der Ringabdeckung auch eine andere Abdeckung, insbesondere vollflächige Abdeckung, oder ein anderes Gehäuse, insbesondere zur zumindest teilweisen Abdeckung eines Lichtquellensubstrats (Leiterplatte, Submount usw.) verwendet werden.

Ganz allgemein kann die Abdeckung, insbesondere Ringabdeckung, auch selbst kein Befestigungsmittel oder Befestigungselemente aufweisen und kann z.B. wie in Fig.1 und Fig.2 gezeigt ausgestaltet sein. Die Befestigung der Ringabdeckung und des zugehörigen LED-Moduls kann dann insbesondere mittels mindestens einer eigenständigen Klammer erreicht werden, welche einerseits die Abdeckung (insbesondere deren Oberseite) und andererseits den Kühlkörper (allgemein: die Auflage) kontaktiert, z.B. darin eingreift oder diesen umgreift. Beispielsweise kann die Klammer wie das Befestigungselement 118 die Oberseite der Ringabdeckung kontaktieren und wie die Laschen 13 ausgebildet sein und in einen entsprechenden Rücksprung 7 der Auflage / des Kühlkörpers eingreifen. Es sind vorzugsweise mehrere solche Klammern vorgesehen, insbesondere für eine zumindest in etwa symmetrische Anordnung.

Aber es sind auch andere Verwendungen eigenständiger Klammern möglich. So mag z.B. ein LED-Modul, das in eine Aussparung des Kühlkörpers eingesetzt ist (ähnlich wie z.B. in Fig.7c gezeigt), mittels mehrerer (Druck-)klammern in der Aussparung gehalten werden. Die Klammern können z.B. seitlich zwischen dem LED-Modul und der Seitenwand der Aussparung zusammengedrückt eingesetzt worden sein.

Zwar ist das Befestigungselement so beschrieben, dass es auch als eine Abdeckung, insbesondere Ringabdeckung dient, jedoch ist die Erfindung nicht darauf beschränkt und kann auch jede andere geeignete Art einer Abdeckung umfassen.

Ferner sind weder das LED-Modul noch der Kühlkörper auf eine rotations- oder drehsymmetrische Grundform, insbesondere Kreisform, beschränkt, sondern können jede geeignete Grundform annehmen, eine Freiform, eine eckige Form usw.

### Bezugszeichenliste

- 1: LED-Modul
- 2: Kühlkörper
- 3: Wärmeschnittstellenmaterial
- 4: Ringabdeckung
- 5: Außenwand der Ringabdeckung
- 6: Kontaktabschnitt
- 7: Rücksprung
- 8: Innenwand der Ringabdeckung
- 9: Rand der Ringabdeckung
- 10: Querschenkel
- 11: Zwischenraum
- 12: Entlastungsschlitz
- 13: Lasche
- 14: Abdeckung
- 15: Außenwand
- 16: LED-Modul
- 17: Innenwand
- 18: Ringabdeckung
- 19: Rand der Innenwand
- 20: Ringabdeckung
- 21: Außenwand
- 22: Kontaktabschnitt
- 23: Kühlkörper
- 24: Montageaussparung
- 25: Hinterschnitt
- 31: LED-Modul
- 32: Kühlkörper
- 33: Ringabdeckung
- 34: Aufnahmeraum
- 35: innerer Arm
- 36: Hebel
- 37: äußerer Arm
- 38: Drehpunkt
- 39: Außenwand des Aufnahmeraums
- 40: Federelement
- 41: Schraube
- 42: Aussparung des Kühlkörpers
- 43: Boden der Aussparung
- 44: Lage
- 45: Seitenwand der Aussparung
- 46: Kühlkörper
- 47: Aussparung
- 48: Hinterschnitt
- 51: LED-Modul
- 52: Reflektor
- 53: Oberseite der Ringabdeckung
- 54: Ringabdeckung
- 55: Kragen
- 56: Lasche
- 57: Aussparung
- 61: LED-Modul
- 62: Reflektor
- 64: Ringabdeckung
- 65: Kragen
- 66: Rücksprung
- 67: Aussparung
- 101: Leuchtmodul
- 102: Leiterplatte
- 103: Rückseite der Leiterplatte
- 104: Kühlkörper
- 105: Vorderseite der Leiterplatte
- 106: Leuchtdiode
- 107: elektronisches Bauteil
- 108: zentraler Bereich der Leiterplatte
- 109: Umgebungsbereich der Leiterplatte
- 110: Ringabdeckung
- 111: Außenwand der Ringabdeckung
- 112: Innenwand der Ringabdeckung
- 113: Abdeckplatte der Ringabdeckung
- 114: Schraubenhalterung
- 115: Schraube
- 116: Durchführungsöffnung in der Leiterplatte
- 117: Schraubloch
- 118: Befestigungselement
- 119: Schraube
- 120: Vorsprung
- S: Symmetrieachse

## Patentansprüche

1. Befestigungselement (20; 33) zum Befestigen eines Lichtquellensubstrats (102) an einer Auflage (23; 32; 46), wobei das Befestigungselement (20; 33) dazu eingerichtet ist, auf dem Lichtquellensubstrat (102) aufzusitzen, und mindestens ein Befestigungsmittel (21, 22; 37) zum Befestigen an der Auflage (23; 32; 46) aufweist, wobei das Befestigungselement (20; 33) als eine Abdeckung zum Abdecken zumindest eines Teils des Lichtquellensubstrats (102) ausgestaltet ist, **dadurch gekennzeichnet, dass** das Befestigungselement (20; 33) mindestens einen verschwenkbaren Hebel (21, 22; 36) mit einem außenliegenden äußeren Arm (21, 22; 37) aufweist, wobei der äußere Arm (21, 22; 37) seitlich ausfahrbar ist.

2. Befestigungselement (33) nach Anspruch 1, wobei eine Schwenklage des mindestens einen Hebels (36) mittels eines zugehörigen Einstellelements einstellbar ist.

3. Befestigungselement (33) nach Anspruch 2, wobei das Einstellelement eine Schraube (41) ist.

4. Befestigungselement nach einem der vorhergehenden Ansprüche, wobei an dem Befestigungselement mindestens ein optisches Element (52; 62) befestigt ist.

5. Leuchtmodul (31), aufweisend
- mindestens ein Lichtquellensubstrat (102) mit einer an einer Vorderseite (105) des Lichtquellensubstrats angeordneten Lichtquelle (106), und aufweisend
- das Befestigungselement(420; 33) nach einem der vorhergehenden Ansprüche, wobei das Befestigungselement auf der Vorderseite (105) des Lichtquellensubstrats (102) aufsitzt.

6. Leuchtmodul(31) nach Anspruch 5, wobei das Befestigungselement (20; 33) fest mit dem Lichtquellensubstrat (102) verbunden ist.

7. Leuchtvorrichtung (23, 26; 31, 32; 31, 46), aufweisend ein Leuchtmodul (26; 31) nach einem der Ansprüche 5 oder 6, wobei das Lichtquellensubstrat (102) mit seiner Rückseite auch einer Auflage aufliegt und das Befestigungselement (20; 33) sowohl auf der Vorderseite des Lichtquellensubstrats (102) aufsitzt als auch an der Auflage (23; 32; 46) befestigt ist.

8. Leuchtvorrichtung (23, 26; 31, 32; 31, 46) nach Anspruch 7 mit einem Befestigungselement (20; 33) nach einem der Ansprüche 1 bis 4, wobei die Auflage (23; 32; 46) eine Aussparung (2447) aufweist, in welche zumindest das Lichtquellensubstrat (102) eingesetzt ist, wobei der mindestens eine äußere Arm (21, 22; 37) so weit ausgefahren ist, dass er die Auflage (23; 32; 46) pressend kontaktiert.

9. Leuchtvorrichtung (23, 26; 31, 46) nach Anspruch 8, wobei die Aussparung (25, 46) mindestens einen Hinterschnitt (25; 48) aufweist, in welchen mindestens ein äußerer Arm (21, 22; 37) eingreift.

## Claims

1. Fastening element (20; 33) for fastening a light source substrate (102) to a support (23; 32; 46), wherein the fastening element (20; 33) is configured to sit on the light source substrate (102) and has at least one fastening means (21; 22; 37) for fastening to the support (23; 32; 46), wherein the fastening element (20; 33) is designed as a cover for covering at least a portion of the light source substrate (102), **characterized in that** the fastening element (20; 33) has at least one pivotable lever (21, 22; 36) having an external outer arm (21, 22; 37), wherein the outer arm (21, 22; 37) is laterally extendable.

2. Fastening element (33) according to Claim 1, wherein a pivot location of the at least one lever (36) is settable by way of an associated setting element.

3. Fastening element (33) according to Claim 2, wherein the setting element is a screw (41).

4. Fastening element according to one of the preceding claims, wherein at least one optical element (52; 62) is fastened to the fastening element.

5. Light-emitting module (31), having
- at least one light source substrate (102) having a light source (106) arranged on a front side (105) of the light source substrate, and having
- the fastening element (420; 33) according to one of the preceding claims, wherein the fastening element is seated on the front side (105) of the light source substrate (102).

6. Light-emitting module (31) according to Claim 5, wherein the fastening element (20; 33) is fixedly connected to the light source substrate (102).

7. Light-emitting apparatus (23, 26; 31, 32; 31, 46), having a light-emitting module (26; 31) according to either of Claims 5 and 6, wherein the light source substrate (102) also rests on a support by way of its rear side and the fastening element (20; 33) both is seated on the front side of the light source substrate (102) and is fastened to the support (23; 32; 46).

8. Light-emitting apparatus (23, 26; 31, 32; 31, 46) according to Claim 7 with a fastening element (20; 33) according to one of Claims 1 to 4, wherein the support (23; 32; 46) has a cutout (2447) in which at least the light source substrate (102) is inserted, wherein the at least one outer arm (21, 22; 37) is extended sufficiently far that it contacts the support (23; 32; 46) in a pressing manner.

9. Light-emitting apparatus (23, 26; 31, 46) according to Claim 8, wherein the cutout (25, 46) has at least one undercut (25; 48) in which at least one outer arm (21, 22; 37) is engaged.

## Revendications

1. Elément de fixation (20; 33) pour fixer un substrat de source lumineuse (102) à un support (23; 32; 46), l'élément de fixation (20; 33) étant configuré de manière à reposer sur le substrat de source lumineuse (102) et comprenant au moins un moyen de fixation (21, 22; 37) pour la fixation au support (23; 32; 46), dans lequel l'élément de fixation (20; 33) est conçu sous forme de couvercle pour recouvrir au moins une partie du substrat de source lumineuse (102), **caractérisé en ce que** l'élément de fixation (20; 33) comprend au moins un levier pivotant (21, 22 ; 36) équipé d'un bras (21, 22; 37) externe disposé à l'extérieur, le bras externe (21, 22; 37) étant susceptible d'être déployé latéralement.

2. Elément de fixation (33) selon la revendication 1, dans lequel une position de pivotement dudit au moins un levier (36) est susceptible d'être réglée au moyen d'un élément de réglage associé.

3. Elément de fixation (33) selon la revendication 2, dans lequel l'élément de réglage est une vis (41).

4. Elément de fixation selon l'une des revendications précédentes, dans lequel au moins un élément optique (52; 62) est rapporté à l'élément de fixation.

5. Module lumineux (31) comportant
- au moins un substrat de source lumineuse (102) équipé d'une source lumineuse (106) disposée sur une face avant (105) du substrat de source lumineuse, et comportant
- l'élément de fixation (420; 33) selon l'une des revendications précédentes, l'élément de fixation reposant sur la face avant (105) du substrat de source lumineuse (102) .

6. Module lumineux (31) selon la revendication 5, dans lequel l'élément de fixation (20; 33) est solidaire du substrat de source lumineuse (102).

7. Dispositif d'éclairage (23, 26; 31, 32; 31, 46) comportant un module lumineux (26; 31) selon l'une des revendications 5 ou 6, dans lequel le substrat de source lumineuse (102) repose sur un support par sa face arrière et l'élément de fixation (20; 33) s'appuie sur la face avant du substrat de source lumineuse (102) en étant également fixé au support (23; 32; 46).

8. Dispositif d'éclairage (23, 26; 31, 32; 31, 46) selon la revendication 7 équipé d'un élément de fixation (20; 33) selon l'une des revendications 1 à 4, dans lequel le support (23; 32; 46) présente un évidement (2447) dans lequel est placé au moins le substrat de source lumineuse (102), l'au moins un bras externe (21, 22; 37) est déployé dans une mesure telle qu'il entre en contact de pression avec le support (23; 32; 46).

9. Dispositif d'éclairage (23, 26; 31, 46) selon la revendication 8, dans lequel l'évidement (25, 46) comporte au moins une contre-dépouille (25; 48) dans laquelle s'enclenche au moins un bras externe (21, 22; 37).
